# EUROPÄISCHE PATENTSCHRIFT

(11) **EP 1 743 139 B1**
(45) Veröffentlichungstag und Bekanntmachung des Hinweises auf die Patenterteilung: **07.07.2010**
(21) Anmeldenummer: 05744805.2
(22) Anmeldetag: 29.04.2005
(51) Int. Cl.: G01C 3/00, G01C 15/00, G01S 5/16, G01S 7/481, G01S 17/06

(54) **ZIELERFASSUNGSGERÄT**
TARGET ACQUISITION DEVICE
APPAREIL D'ACQUISITION DE CIBLE

(30) Priorität: 04.05.2004 CH 792042004
(43) Veröffentlichungstag der Anmeldung: 17.01.2007
(73) Patentinhaber: Leica Geosystems AG, 9435 Heerbrugg (CH)
(72) Erfinder: HINDERLING,Jürg, CH-9437 Marbach (CH)
(74) Vertreter: Harmann, Bernd-Günther
(86) Internationale Anmeldenummer: PCT/EP2005/004618
(87) Internationale Veröffentlichungsnummer: WO 2005/108920

(56) Entgegenhaltungen:
- US-A- 3 533 696
- US-A- 4 375 332
- US-A- 4 611 911
- US-A- 5 886 777
- US-A1- 2002 180 956

## Beschreibung

### Technisches Gebiet

Die Erfindung betrifft ein Zielerfassungsgerät gemäss dem Oberbegriff des Anspruchs 1, z.B. einen optoelektronischen Entfernungsmesser oder Richtungsmesser. Mit einem derartigen Zielerfassungsgerät können Parameter der Lage eines Ziels bezüglich derjenigen des Gerätes, etwa seine Entfernung oder die Richtung, in der es liegt, bestimmt werden, indem es mit einem modulierten Lichtstrahl angeleuchtet und von ihm reflektierte aufgefangene Strahlung verarbeitet wird. Zielerfassungsgeräte dieser Art werden vor allem zu Vermessungszwecken eingesetzt. Typische Zielobjekte sind Retroreflektoren aus Glas oder Reflexfolien aus Kunststoff.

### Stand der Technik

Gattungsgemässe Zielerfassungsgeräte sind aus zahlreichen Veröffentlichungen bekannt. Bei dem in DE 198 40 049 A1 beschriebenen Entfernungsmesser wird ein kombinierter Sendestrahl in die optische Achse des einzigen Objektivs umgelenkt und der durch dasselbe empfangene Messstrahl verarbeitet, indem seine Laufzeit oder seine Phase festgestellt und daraus die Entfernung des Ziels abgeleitet wird.

Aus DE 43 16 348 A1 ist ein ähnlicher Entfernungsmesser bekannt, bei welchem dem Sender ein eigenes, von dem des Empfängers getrenntes Objektiv zugeordnet ist.

Bei Zielerfassungsgeräten dieser Art treten Mehrfachreflexionen auf, bei denen Anteile des vom Ziel reflektierten Messstrahls an Elementen des Geräts reflektiert werden und sich dem Sendestrahl überlagern, so dass ein Teil davon zum zweiten Mal am Ziel reflektiert und dann vom Empfänger aufgefangen wird. Solche Anteile, die den Weg vom Zielerfassungsgerät zum Ziel und zurück zwei Mal oder bei mehrfacher Reflexion am Gerät auch noch öfter durchlaufen, können, vor allem wenn die Verarbeitung des Messstrahls auf Feststellung seiner Phase, Laufzeit oder Abbildung zur Richtungsbestimmung beruht, störende Verfälschungen des Messergebnisses verursachen. Diese sind im allgemeinen umso grösser, je grösser die relative Intensität des mehrfach reflektierten Anteils ist. Sie sind daher vor allem bei kleinen Abständen zwischen Zielerfassungsgerät und Ziel von Bedeutung, wenn die Intensität der mehrfach reflektierten Anteile trotz der bei den Reflexionen eintretenden Abschwächungen verhältnismässig gross ist.

Besonders kritisch sind Reflexionen am Empfänger, insbesondere an der Eintrittsfläche desselben oder an dieselbe umgebenden Flächen, doch können auch am Sender störende Reflexionen auftreten. In beiden Fällen wird reflektierte Strahlung von der Optik mehr oder weniger ausgeprägt auf das Ziel gebündelt und daher nur geringfügig geschwächt, so dass das Messergebnis merklich verfälscht werden kann.

In der US 5,886,777 ist ein elektronischer Distanzmesser beschrieben, der wenigstens ein Abschwächungsfilter aufweist das gegenüber der Mittelache des Strahlungsweges geneigt ist, um das Einfallen irregulärer Reflexionen auf den Detektor zu verhindern.

Aus der US 4,611,911 ist eine Anordnung bekannt, bei der eine geneigte Ablenkfläche vorgesehen ist, welche verhindern soll, dass das Sende-Strahlenbündel direkt in den Strahlengang des Empfangs-Strahlenbündels oder des Referenzstrahls eintreten kann.

Zwar gibt es zur Entfernungsmessung auch Verfahren, bei denen Mehrfachreflexionen das Messergebnis nicht beeinflussen, z.B. den beim Mekometer ME 5000 der Anmelderin eingesetzten Nullphasenabgleich, bei welchem die Modulationsfrequenz so abgestimmt wird, dass der Weg zwischen Sender und Empfänger einerseits und Ziel andererseits stets ein Vielfaches der Modulationswellenlänge beträgt, doch ist der Einsatz solcher Verfahren im allgemeinen aufwendig und die entsprechenden Zielerfassungsgeräte verhältnismässig gross und teuer.

### Darstellung der Erfindung

Der Erfindung liegt die Aufgabe zu Grunde, ein gattungsgemässes Zielerfassungsgerät hinsichtlich seiner Messgenauigkeit zu verbessern, indem Mehrfachreflexionen zwischen Zielobjekt und Instrument möglichst weitgehend unterdrückt werden. Diese Aufgabe wird durch die Merkmale im Kennzeichen des Anspruchs 1 gelöst. Alternative und bevorzugte Ausbildungen der Erfindung sind in den Kennzeichen der abhängigen Ansprüche beschrieben.

Durch die Erfindung wird ein Zielerfassungsgerät geschaffen, bei dem Strahlung, welche aus Mehrfachreflexionen, vor allem solchen am Empfänger oder am Sender, stammt oder zu solchen führen könnte, möglichst weitgehend unterdrückt oder spezifisch geschwächt wird. Die durch Mehrfachreflexionen verursachten Messfehler werden auf diese Weise weitgehend ausgeschaltet oder wesentlich vermindert.

### Kurze Beschreibung der Zeichnungen

Im folgenden wird die Erfindung anhand von Figuren, welche lediglich Ausführungsbeispiele darstellen, näher erläutert.
Es zeigen
- Fig. 1: schematisch den Aufbau eines erfindungsgemässen Entfernungsmessers,
- Fig. 2: einen Schnitt durch einen Teil des Empfängers des Entfernungsmessers von Fig. 1,
- Fig. 3: schematisch den Aufbau eines Richtungsmessers und
- Fig. 4: eine Vorderansicht eines Teils des Empfängers des Richtungsmessers von Fig. 3.

### Wege zur Ausführung der Erfindung

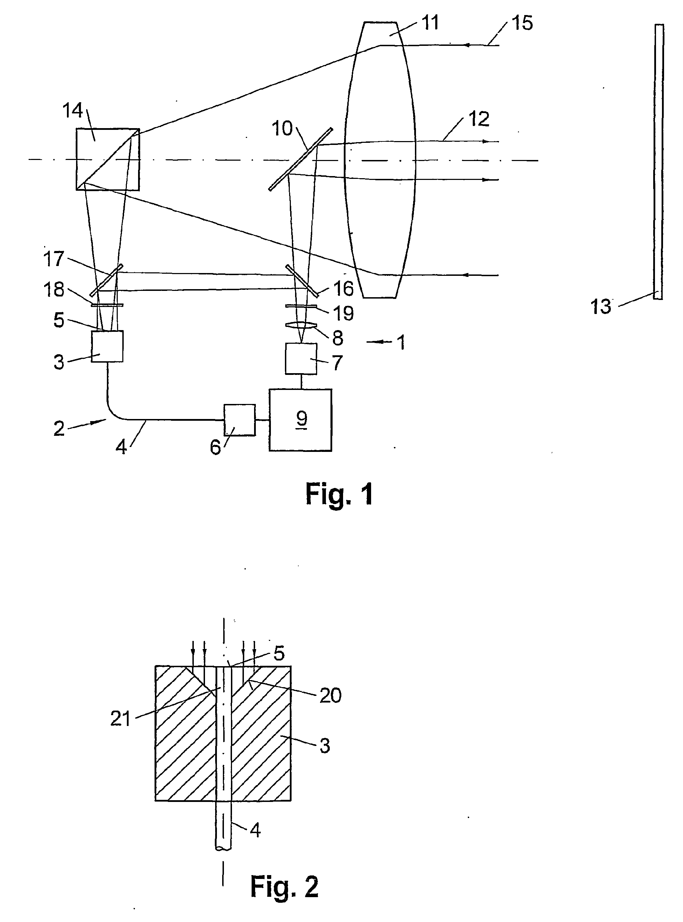

Der in Fig. 1 dargestellte Entfernungsmesser weist in einem Gehäuse einen Sender 1 auf sowie einen Empfänger 2, welcher eine Halterung 3 umfasst sowie eine Lichtleitfaser 4, welche an der Halterung 3 befestigt ist und deren Endfläche eine vergütete Eintrittsfläche 5 bildet. Sie führt zu einem lichtempfindlichen Element, das ein der Intensität des einfallenden Lichtes entsprechendes elektrisches Messsignal erzeugt, z.B. einer Photodiode 6. Der Sender 1 umfasst eine z.B. im Infrarotbereich sendende Laserdiode 7 sowie eine derselben nachgeordnete Kollimationsoptik 8. Die Laserdiode 7 wird von einer Steuereinheit 9 gesteuert, die auch das Ausgangssignal der Photodiode 6 verarbeitet.

Der vom Sender 1 ausgehende Strahl wird von einem Spiegel 10 als erstem Umlenkmittel in die optische Achse eines Objektivs 11 umgelenkt, durch das er als Sendestrahl 12 mit i.a. geringer Strahlaufweitung gegen ein Ziel 13 geleitet wird, das als Retroreflektor, Reflektorfolie oder Katzenaugen ausgebildet ist oder von der Oberfläche irgend eines Objektes, z.B. eines Gebäudes gebildet wird.

Etwas hinter dem Spiegel 10 ist in der optischen Achse des Objektivs 11 ein zweites Umlenkelement angeordnet, das als Würfelprisma 14 ausgebildet ist. Es leitet den durch das Objektiv 10 einfallenden Messstrahl 15, d.h. im wesentlichen den vom Ziel 13 reflektierten Anteil des Sendestrahls 12, gegen die Eintrittsfläche 5 des Empfängers 2.

Durch zwei Strahlteiler 16, 17, von denen der erste zwischen der Kollimationsoptik 8 und dem Spiegel 10 und der zweite zwischen dem Würfelprisma 14 und der Eintrittsfläche 5 liegt, wird ein Referenzlichtweg bekannter Länge hergestellt, über den ein Teil des vom Sender 1 ausgesandten Strahls als Referenzstrahl direkt dem Empfänger 2 zugeleitet wird.

Messstrahl 15 und Referenzstrahl können z.T. am Empfänger 2 reflektiert werden. Zudem kann auch ein Anteil des Messstrahls 15 zum Sender 1 gelangen und an diesem reflektiert werden. Diese Anteile können, nach Reflexion am Ziel 13, eine Verfälschung des Messergebnisses verursachen.

Zur gezielten Schwächung von Strahlen, die aus Mehrfachreflexionen stammen, ist der Einstrittsfläche 5 des Empfängers 2 unmittelbar ein erster Abschwächungsfilter 18 vorgeschaltet, welcher transmittiertes Licht schwächt, d.h. seine Intensität um einen Faktor A vermindert, für den z.B. A≤0.7, vorzugsweise A≤0.5 oder sogar A≤0.3, gilt.

Ein entsprechender zweiter Abschwächungsfilter 19 ist unmittelbar der Kollimationsoptik 8 des Senders 1 nachgeordnet. Die beiden Abschwächungsfilter 18, 19 können schaltbar ausgebildet sein, so dass sie - insbesondere in Abhängigkeit von der Grössenordnung der Entfernung des Ziels 13 - dem Empfänger 2 bzw. dem Sender 1, vorzugsweise unabhängig voneinander, vor- bzw. nachgeschaltet werden können, so dass etwa bei grösseren Distanzen auf den Einsatz der Abschwächungsfilter 18, 19 oder wenigstens eines davon verzichtet werden kann. Die Abschwächungsfilter 18, 19 können auch einen verlaufenden oder gegebenenfalls einstellbaren Transmissionsgrad aufweisen, so dass das Ausmass der Abschwächung etwa in Abhängigkeit von der Entfernung des Ziels gewählt werden kann. Im übrigen können die Abschwächungsfilter 18, 19 jeweils in verschiedener Weise ausgebildet sein, z.B. als panchromatisches oder orthochromatisches Filmmaterial oder als orthochromatisch sensibilisierter Röntgenfilm, als Neutralfilter oder Gelatine-Graufilter oder als transparenter Film oder als Glas mit Linienstruktur wie Rasterfilter, Gitterfilter oder Filter mit stochastischem Abschwächmuster.

Alternativ oder zusätzlich können jedoch auch das erste und/oder das zweite Umlenkmittel zugleich als Abschwächungsmittel ausgebildet sein. So kann etwa der Spiegel 10 als dichroitischer Spiegel ausgebildet sein, welcher einen Teil des Lichtes, das auf ihn fällt, absorbiert. Desgleichen kann das Würfelprisma 14 leicht absorbierend ausgebildet sein.

Als weiteres Schwächungsmittel für Strahlanteile, die zu Mehrfachreflexionen Anlass geben könnten, ist an der Halterung 3 des Empfängers 2 eine Ablenkfläche 20 vorgesehen. Sie bildet einen 0,5mm bis 1,5mm tiefen, im wesentlichen konisch kegelförmigen, Trichter, in dessen Achse ein etwa ebenso langer an die Eintrittsfläche 5 anschliessender Endabschnitt 21 der Lichtleitfaser 4 freiliegt. Alternativ könnte diese Ablenkfläche auch als kegelförmig erhabene, die Lichtleiterfaser 4 umgebende Fläche ausgebildet sein. Die Kegelform ist beispielhaft für eine Flächenform, die die darauf fallenden Messstrahlen in eine von ihrer Einfallsrichtung abweichende Richtung reflektiert.

Zur Messung der Entfernung des Zieles 13 vom Entfernungsmesser kann vom Sender 1 eine Folge kurzer Lichtpulse ausgesendet werden und die Entfernung aus der Laufzeit bis zum Eintreffen der vom Ziel 13 reflektierten Pulse bestimmt werden oder es kann ein kontinuierlicher Lichtstrahl ausgesendet werden, der periodisch, z.B. mit einem Sinus, moduliert ist. In letzterem Fall wird zur Bestimmung des Entfernung die Phasenlage des vom Ziel reflektierten und vom Empfänger 2 empfangenen Strahls relativ zum Referenzstrahl bestimmt. Diese Verfahren sind hinlänglich bekannt und sollen hier nicht näher erläutert werden.

Vor allem bei der Phasenmessung spielen Strahlanteile, welche nicht den regulären Lichtweg vom Sender 1 über den Spiegel 10, das Objektiv 11 zum Ziel 13 und zurück durch das Objektiv 11 und über das Würfelprisma 14 in die Lichtleitfaser 4 zurücklegen, sondern auch an einem anderen Objekt als dem Ziel 13 reflektiert werden und somit einen Teil des Weges doppelt oder mehrfach zurücklegen, eine nicht immer vernachlässigbare Rolle. Besonders kritisch ist die Reflexion eines Anteils des vom Ziel 13 reflektierten und durch das Objektiv 11 einfallenden Messstrahls 15 am Empfänger 2, insbesondere an dessen Eintrittsfläche 5. Zwar kann das Problem durch leichte Anschrägung, z.B. um 5%, derselben entschärft werden, doch hat dies den Nachteil, dass der Messstrahl gebrochen wird, so dass er unter einem Winkel eintritt. Dadurch wird die nutzbare numerische Apertur der Faser verringert.

Erfindungsgemäss werden, wie beschrieben, reflektierte Strahlanteile durch den Abschwächungsfilter 18 gezielt geschwächt. Der reguläre, d.h. lediglich ein Mal am Ziel 13 reflektierte Strahlanteil durchläuft den Abschwächungsfilter 18 lediglich ein Mal und wird daher lediglich ein Mal um den Faktor A geschwächt. Dagegen läuft ein an der Eintrittsfläche 5 reflektierter Anteil, der nochmals am Ziel 13 reflektiert wird, den Abschwächungsfilter 18 drei Mal, wird also um einen Faktor A³ geschwächt, d.h. er wird um einen Faktor A², also etwa bei A=0.3 um 0.3²≈0.1 stärker geschwächt und damit gegenüber dem regulären Anteil fast vollständig unterdrückt, zumal auch die Reflexion an der Eintrittsfläche 5 und am Ziel 13 jeweils mit einer Schwächung verbunden ist, der der zwei Mal reflektierte Anteil dreifach, der reguläre Anteil jedoch nur einfach unterworfen ist.

Störend können auch Anteile des Messstrahls 15 sein, die auf die Umgebung der Eintrittsfläche 5 fallen. Hier sorgt die Ausbildung der Ablenkfläche 20 dafür, dass ein grosser Anteil absorbiert wird und der nie ganz zu vermeidende Rest in eine Richtung reflektiert wird, welche nicht der Einfallsrichtung entspricht, so dass er nicht über das Würfelprisma 14 und durch das Objektiv 10 gegen das Ziel 13 reflektiert wird. Die erwähnten Ausbildungen der Ablenkfläche 20 bewirken eine wesentliche Verringerung störender Reflexionen am Empfänger 2 und können auch für sich allein als Massnahme zur Verminderung von Mehrfachreflexionen vorgesehen werden.

Eine Rolle, die der des Abschwächfilters 18 für vom Empfänger 2 reflektierte Strahlanteile entspricht, spielt der Abschwächfilter 19 für Anteile des Messstrahls 15, die über den Spiegel 10 auf den Sender 1 zurückgeworfen und an demselben reflektiert werden. Auch hier tritt eine dreifache Abschwächung ein gegenüber einer nur einfachen des regulären Strahlanteils. Insgesamt sind wenigstens drei Varianten von Entfernungsmessern denkbar, eine mit lediglich einem Abschwächmittel 18 vor dem Empfänger, eine weitere mit lediglich einem Abschwächmittel 19 vor dem Sender, und weiters eine mit zwei Abschwächmitteln 18 und 19 gemäss Figur 1 ausgerüstet.

Wie erwähnt, ist es auch möglich, die Abschwächungsmittel mit den Umlenkmitteln - handele es sich nun um einen Spiegel, ein Prisma oder ein anderes, den Strahlengang umlenkendes Bauteil - zu integrieren. Dies vereinfacht vor allem den Aufbau des Entfernungsmessers und verbilligt seine Herstellung. Ausserdem können etwa an einem dichroitischen Spiegel selbst kaum störende Reflexionen entstehen. Werden die Abschwächungsmittel als möglichst nahe am Sender und/oder am Empfänger angeordnete Abschwächungsfilter ausgebildet, so werden auch praktisch alle internen Reflexionen, abgesehen von allfälligen Reflexionen an den Abschwächungsfiltern selbst, abgeschwächt. So werden auch im Referenzlichtweg reflektierte Anteile, die ebenfalls zu einer Verfälschung des Messergebnisses beitragen können, geschwächt.

Der in Fig. 1, 2 dargestellte Entfernungsmesser ist - wie dem Fachmann auf dem Gebiet der Entfernungsmessung geläufig - nur eine von mehreren Möglichkeiten der Anordnung der wesentlichen Bauteile. Das erfindungsgemässe Prinzip zur Unterdrückung oder Verminderung von die Messgenauigkeit negativ beeinflussenden Mehrfachreflexionen ist in gleicher Weise sowohl bei koaxialen Entfernungsmessern mit einem oder zwei Objektiven als auch bei nicht-koaxialen Entfernungsmessern anwendbar.

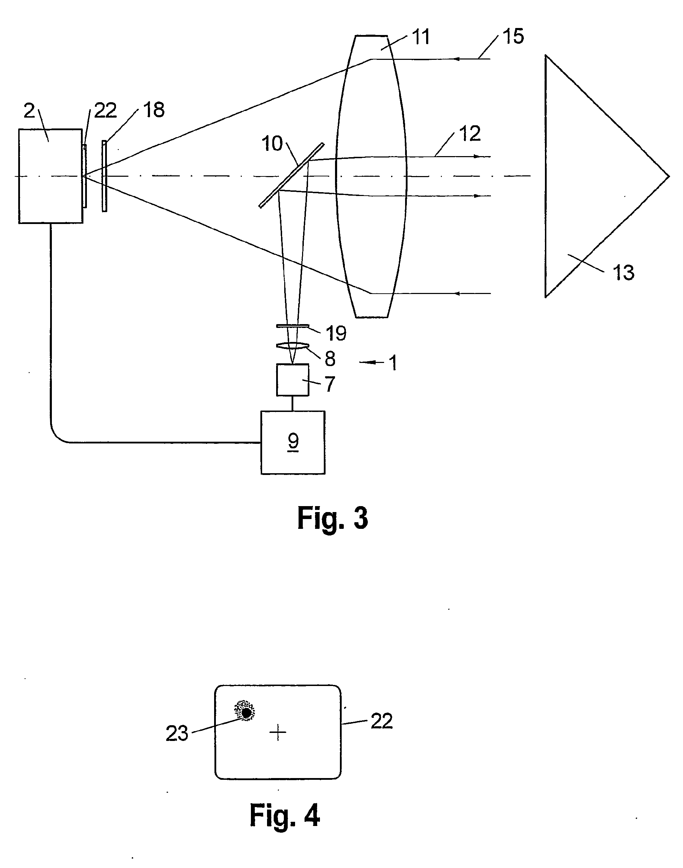

Entsprechende Überlegungen gelten auch für den den Fig. 3, 4 entnehmbaren Richtungsmesser, welcher jedoch nicht Gegenstand der Erfindung ist. Dieses Gerät ist z.T. wie der Entfernungsmesser gemäss Fig. 1, 2 aufgebaut. Entsprechende Teile sind gleich bezeichnet und werden zur Vermeidung von Wiederholungen nicht nochmals beschrieben.

Der Empfänger 2 liegt in der optischen Achse und ist als elektronische Kamera ausgebildet mit beispielsweise einem rechteckigen Schirm 22 aus lichtempfindlichen Elementen wie CCD oder CMOS, wobei der Mittelpunkt des Schirms im oder nahe am Brennpunkt des Objektivs 11 liegt. Dem Empfänger 2 ist wiederum ein erstes Abschwächungsfilter 18 vor- und dem Sender 2 eine zweites Abschwächungsfilter 19 nachgeschaltet. Das Ziel 13 ist als Reflektor, insbesondere als Tripelprisma ausgebildet.

Der Messstrahl 15, erzeugt durch den vorzugsweise divergenten und am Ziel 13 reflektierten Sendestrahl 12, wird auf einen Messlichtfleck 23 auf dem Schirm 22 kollimiert, dessen Lage von der Richtung abhängt, welchen die Richtung, in der das Ziel 13 liegt, mit der optischen Achse des Geräts einschliesst. Mehrfachreflexionen können dazu führen, dass Anteile des Messstrahls 15 in der Umgebung des Messlichtflecks 23 auf den Schirm 22 fallen und sogenannte Geisterbilder verursachen, welche die genaue Feststellung der Lage des Messlichtflecks 23 erschweren. Doppel- oder Mehrfachbilder sind vor allem durch Reflexionen am grossflächigen Schirm 22 wahrscheinlich. Ein Teil der Strahlung des Lichtflecks 23 wird über das Objektiv 11 zurück in Richtung Ziel 13 reflektiert, von diesem erneut gespiegelt und nochmals auf den Schirm 22 als Geisterbild abgebildet. Auch sind diese unerwünschten Geisterbilder wegen fehlender Fokussierung grösser als der eigentliche Messlichtfleck. Durch diese Massnahmen, insbesondere durch den ersten Abschwächungsfilter 18 aber auch durch den zweiten Abschwächungsfilter 19 werden diese Mehrfachreflexionen wiederum so stark geschwächt, dass sie keinen verfälschenden Einfluss auf das Messergebnis haben.

## Patentansprüche

1. Zielerfassungsgerät mit einem Objektiv (11), einem elektrisch steuerbaren Sender (1) zur Aussendung eines Sendestrahls (12), einem Empfänger (2) zum Empfang eines Messstrahls (15) aus von einem Ziel (13) reflektierten Anteilen des Sendestrahls (12) durch das Objektiv (11), mit einer demselben nachgeordneten Eintrittsfläche (5) und einem damit, ggf. lichtleitend, verbundenen lichtempfindlichen Element, welches bei Lichteinfall ein elektrisches Messsignal erzeugt, sowie mit einer Steuereinrichtung (9) zur Steuerung des Senders (1) und Verarbeitung des Messsignals, wobei Schwächungsmittel zur gezielten Unterdrückung oder Schwächung von Strahlen, die aus Mehrfachreflexionen stammen oder zu Mehrfachreflexionen Anlass geben könnten, vorgesehen sind, **dadurch gekennzeichnet, dass** die Schwächungsmittel eine Ablenkfläche (20) umfassen, welche die Eintrittsfläche (5) des Empfängers (2) wenigstens teilweise umgibt und auftreffende Anteile des Messstrahls (15), soweit sie nicht absorbiert werden, überwiegend in Richtungen reflektiert, welche von der Einfallsrichtung abweichen, und wobei die Ablenkfläche (20) die Form eines, vorzugsweise konischen, Trichters aufweist.

2. Zielerfassungsgerät nach Anspruch 1, **dadurch gekennzeichnet, dass** der Trichter eine Tiefe von zwischen 0,5mm und 1,5mm aufweist und die Eintrittsfläche (5) von der Endfläche eines Lichtleiters (4) gebildet wird, dessen Endabschnitt (21) der Trichter mit Abstand umgibt.

3. Zielerfassungsgerät nach Anspruch 1 oder 2, **dadurch gekennzeichnet, dass** die Ablenkfläche (20) absorbierend ausgebildet ist.

4. Zielerfassungsgerät nach einem der vorhergehenden Ansprüche, **dadurch gekennzeichnet, dass** die Schwächungsmittel weiters wenigstens ein erstes, dem Empfänger (2) vorgeordnetes und die Intensität eines über dasselbe geleiteten Strahls verminderndes Abschwächungsfilter (18) umfassen.

5. Zielerfassungsgerät nach Anspruch 4, **dadurch gekennzeichnet, dass** das mindestens eine erste Abschwächungsfilter so ausgebildet ist, dass die Intensität eines über dasselbe geleiteten Strahls um einen Faktor ≤0.7, vorzugsweise ≤0.5 und insbesondere ≤0.3 vermindert wird.

6. Zielerfassungsgerät nach Anspruch 4 oder 5, **dadurch gekennzeichnet, dass** das mindestens eine erste Abschwächungsfilter einem ersten Umlenkmittel zur Ablenkung des durch das Objektiv (11) einfallenden Messstrahls (15) integriert zugeordnet ist.

7. Zielerfassungsgerät nach Anspruch 6, **dadurch gekennzeichnet, dass** das erste Umlenkmittel ein absorbierendes Würfelprisma (14) oder ein dichroitischer Spiegel ist.

8. Zielerfassungsgerät nach einem der vorhergehenden Ansprüche, **dadurch gekennzeichnet, dass** die Schwächungsmittel mindestens ein zweites dem Sender nachgeordnetes, die Intensität eines über dasselbe geleiteten Strahls verminderndes, Abschwächungsfilter (19) ausgebildet ist

9. Zielerfassungsgerät nach Anspruch 8, **dadurch gekennzeichnet, dass** das mindestens eine zweite Abschwächungsfilter (19) so ausgebildet ist, dass die Intensität eines über dasselbe geleiteten Strahls um einen Faktor ≤0,7, vorzugsweise ≤0,5 und insbesondere ≤0,3 vermindert wird.

10. Zielerfassungsgerät nach Anspruch 8 oder 9, **dadurch gekennzeichnet, dass** es einen dem zweiten Abschwächungsfilter (19) nachgeordneten Strahlteiler (16) umfasst, welcher aus dem vom Sender (1) ausgehenden Strahl einen Referenzstrahl abzweigt.

11. Zielerfassungsgerät nach einem der Ansprüche 8 bis 10, **dadurch gekennzeichnet, dass** das mindestens eine zweite Abschwächungsfilter einem zweiten Umlenkmittel zur Umlenkung des Sendestrahls (12) gegen das Objektiv (11) integriert zugeordnet ist.

12. Zielerfassungsgerät nach Anspruch 11, **dadurch gekennzeichnet, dass** das zweite Umlenkmittel ein absorbierendes Würfelprisma oder ein dichroitischer Spiegel (10)ist.

13. Zielerfassungsgerät nach einem der Ansprüche 4 bis 12, **dadurch gekennzeichnet, dass** das erste Abschwächungsfilter (18) und/oder das weitere Abschwächungsfilter (19) schaltbar ausgebildet ist und/oder einen einstellbaren Transmissionsgrad aufweist, so dass das Ausmass der Abschwächung einstellbar ist.

14. Zielerfassungsgerät nach Anspruch 4 bis 13, **dadurch gekennzeichnet, dass** das erste Abschwächungsfilter (18) und/oder das zweite Abschwächungsfilter (19) als panchromatisches oder orthochromatisches Filmmaterial oder orthochromatisch sensibilisierter Röntgenfilm, als Neutralfilter oder Gelatine-Graufilter oder transparenter Film oder als Glas mit Linienstruktur wie Rasterfilter, Gitterfilter oder Filter mit stochastischem Abschwächmuster ausgebildet ist.

15. Zielerfassungsgerät nach einem der vorhergehenden Ansprüche, **dadurch gekennzeichnet, dass** die Eintrittsfläche (5) gegen eine zur Eintrittsrichtung des reflektierten Messstrahls liegende Vertikale, beispielsweise um ca 5%, angeschrägt ausgebildet ist.

## Claims

1. Target acquisition device having an objective (11), an electrically controllable transmitter (1) for emitting a transmitted beam (12), a receiver (2) for receiving a measuring beam (15), comprising components of the transmitted beam (12) which are reflected by a target (13), through the objective (11), having an entry surface (5) arranged after said objective and a photosensitive element which is connected thereto, optionally in a light-conducting manner, and which generates an electrical measuring signal on incidence of light, and having a control device (9) for controlling the transmitter (1) and processing the measuring signal, attenuating means for targeted suppression or attenuation of the beams which originate from multiple reflections or might give rise to multiple reflections being provided, **characterized in that** the attenuating means comprise a deflection surface (20) which at least partly surrounds the entry surface (5) of the receiver (2) and reflects resultant components of the measuring beam (15), unless they are absorbed, predominantly in directions which deviate from the direction of incidence, the deflection surface (20) having the form of a preferably conical funnel.

2. Target acquisition device according to Claim 1, **characterized in that** the funnel has a depth of between 0.5 mm and 1.5 mm and the entry surface (5) is formed by the end surface of an optical waveguide (4), the end section (21) of the waveguide (4) being surrounded by the funnel at a distance.

3. Target acquisition device according to Claim 1 or 2, **characterized in that** the deflection surface (20) is formed so as to be absorbing.

4. Target acquisition device according to any of the preceding claims, **characterized in that** the attenuating means furthermore comprise at least one first attenuating filter (18) arranged before the receiver (2) and reducing the intensity of a beam guided via it.

5. Target acquisition device according to Claim 4, **characterized in that** the at least one first attenuating filter is formed so that the intensity of a beam guided via it is reduced by a factor of ≤ 0.7, preferably ≤ 0.5 and in particular ≤ 0.3.

6. Target acquisition device according to Claim 4 or 5, **characterized in that** the at least one first attenuating filter is coordinated and integrated with a first deflection means for deflecting the measuring beam (15) incident through the objective (11).

7. Target acquisition device according to Claim 6, **characterized in that** the first deflection means is an absorbing cube prism (14) or a dichroic mirror.

8. Target acquisition device according to any of the preceding claims, **characterized in that** the attenuating means is in the form of at least one second attenuating filter (19) arranged after the transmitter and reducing the intensity of a beam guided via said transmitter.

9. Target acquisition device according to Claim 8, **characterized in that** the at least one second attenuating filter (19) is formed in such a way that the intensity of a beam guided via it is reduced by a factor of ≤ 0.7, preferably ≤ 0.5 and in particular ≤ 0.3.

10. Target acquisition device according to Claim 8 or 9, **characterized in that** it comprises a beam splitter (16) which is arranged after the second attenuating filter (19) and branches off a reference beam from the beam emanating from the transmitter (1).

11. Target acquisition device according to any of Claims 8 to 10, **characterized in that** the at least one second attenuating filter is coordinated and integrated with a second deflection means for deflecting the transmitted beam (12) towards the objective.

12. Target acquisition device according to Claim 11, **characterized in that** the second deflection means is an absorbing cube prism or a dichroic mirror.

13. Target acquisition means according to any of Claims 4 to 12, **characterized in that** the first attenuating filter (18) and/or the further attenuating filter (19) is formed so as to be switchable and/or has an adjustable transmittance so that the extent of the attenuation is adjustable.

14. Target acquisition device according to Claims 4 to 13, **characterized in that** the first attenuating filter (18) and/or the second attenuating filter (19) is in the form of panchromatic or orthochromatic film material or orthochromatically sensitized X-ray film, in the form of a neutral filter or gelatin grey filter or transparent film or in the form of glass having a line structure, such as a screen filter, a grating filter or a filter having a stochastic attenuation pattern.

15. Target acquisition device according to any of the preceding claims, **characterized in that** the entry surface (5) is formed bevelled, for example by about 5%, relative to a vertical to the entry direction of the reflected measuring beam.

## Revendications

1. Appareil d'acquisition de cible, avec un objectif (11), un émetteur (1) susceptible d'être commandé électriquement, pour émettre un rayon d'émission (12), un récepteur (2) pour recevoir, au moyen de l'objectif (11), un rayon de mesure (15) provenant de parties, réfléchies par une cible (13), du rayon d'émission (12), avec une face d'entrée (5), disposée en aval de l'objectif (11), et un élément photosensible lui étant relié, le cas échéant en guidant la lumière, générant un signal de mesure électrique en cas d'incidence d'une lumière, ainsi qu'avec un dispositif de commande (9), pour commander l'émetteur (1) et traiter le signal de mesure, des moyens d'affaiblissement étant prévus, pour supprimer ou affaiblir, à dessein, des rayons provenant de réflexions multiples ou pouvant donner lieu à des réflexions multiples, **caractérisé en ce que** les moyens d'affaiblissement comprennent une face de déviation (20), entourant au moins partiellement la face d'entrée (5) du récepteur (2) et réfléchissant des parties incidentes du rayon de mesure (15), dans la mesure où elles ne sont pas absorbés, la réflexion se faisant principalement dans des directions différentes de la direction d'incidence, et la face de déviation (20) présentant la forme d'un entonnoir, de préférence conique.

2. Appareil d'acquisition de cible selon la revendication 1, **caractérisé en ce que** l'entonnoir présente une profondeur dans la fourchette comprise entre 0,5 mm et 1,5 mm, et la face d'entrée (5) est formée par la face d'extrémité d'un guide de lumière (4), dont le tronçon d'extrémité (21) est entouré à distance par l'entonnoir.

3. Appareil d'acquisition de cible selon la revendication 1 ou 2, **caractérisé en ce que** la face de déviation (20) est absorbante.

4. Appareil d'acquisition de cible selon l'une des revendications précédentes, **caractérisé en ce que** les moyens d'affaiblissement comprennent en outre au moins un premier filtre d'affaiblissement (18), disposé en amont du récepteur (2) et diminuant l'intensité d'un rayon dirigé à travers celui-ci.

5. Appareil d'acquisition de cible selon la revendication 4, **caractérisé en ce que** le au moins un premier filtre d'affaiblissement est réalisé de manière à diminuer d'un facteur ≤ 0,7, de préférence ≤ 0,5 et, en particulier, ≤ 0,3, l'intensité d'un rayon guidé à travers celui-ci.

6. Appareil d'acquisition de cible selon la revendication 4 ou 5, **caractérisé en ce que** le au moins un premier filtre d'affaiblissement est associé, de manière intégrée, à un premier moyen de déviation, de manière à dévier le rayon de mesure (15) incident à travers l'objectif (11).

7. Appareil d'acquisition de cible selon la revendication 6, **caractérisé en ce que** le premier moyen de déviation est un prisme cubique (14) absorbant, ou un miroir dichroïque.

8. Appareil d'acquisition de cible selon l'une des revendications précédentes, **caractérisé en ce que** les moyens d'affaiblissement comprennent au moins un deuxième filtre d'affaiblissement (19), disposé en aval de l'émetteur, diminuant l'intensité d'un rayon dirigé à travers celui-ci.

9. Appareil d'acquisition de cible selon la revendication 8, **caractérisé en ce que** le au moins un deuxième filtre d'affaiblissement (19) est réalisé de manière que l'intensité d'un rayon guidé à traverse celui-ci soit diminuée d'un facteur ≤ 0,7, de préférence ≤ 0,5 et, en particulier, ≤ 0,3.

10. Appareil d'acquisition de cible selon la revendication 8 ou 9, **caractérisé en ce qu'**il comprend un diviseur de rayon (16), disposé en aval du deuxième filtre d'affaiblissement (19), dérivant un rayon de référence à partir du rayon partant de l'émetteur (1).

11. Appareil d'acquisition de cible selon l'une des revendications 8 à 10, **caractérisé en ce que** le au moins un deuxième filtre d'affaiblissement est associé, de manière intégrée, à un deuxième moyen de déviation, de manière à dévier le rayon d'émission (12) vers l'objectif (11).

12. Appareil d'acquisition de cible selon la revendication 11, **caractérisé en ce que** le deuxième moyen de déviation est un prisme cubique absorbant, ou un miroir (10) dichroïque.

13. Appareil d'acquisition de cible selon l'une des revendications 4 à 12, **caractérisé en ce que** le premier filtre d'affaiblissement (18) et/ou l'autre filtre d'affaiblissement (19) est/sont commutable(s) et/ou présente(nt) un degré de transmission réglable, de manière que le degré d'affaiblissement soit réglable.

14. Appareil d'acquisition de cible selon l'une des revendications 4 à 13, **caractérisé en ce que** le premier filtre d'affaiblissement (18) et/ou le deuxième filtre d'affaiblissement (19) est/sont réalisé(s) sous forme de matériau de film panchromatique ou orthochromatique, ou de film radiographique sensibilisé de manière orthochromatique, sous forme de filtre neutre ou de filtre gris à la gélatine, ou de film transparent ou de verre à structure linéaire, tel que filtre à trame, filtre à réseau ou filtre à motif d'affaiblissement stochastique.

15. Appareil d'acquisition de cible selon l'une des revendications précédentes, **caractérisé en ce que** la face d'entrée (5) est conformée avec une inclinaison, par exemple d'à peu près 5 %, par rapport à une verticale placée dans la direction d'entrée du rayon de mesure réfléchi.
